# EUROPEAN PATENT APPLICATION

(11) **EP 1 086 913 A1**
(43) Date of publication of application: **28.03.2001**
(21) Application number: 00119289.7
(22) Date of filing: 06.09.2000
(51) Int. Cl.: B65G 65/48, B65G 65/44

(54) **Discharge device for a vertical cylindrical silo**

(30) Priority: 21.09.1999 NO 994594
(71) Applicant: SAXLUND A/S, N-4994 Akland (NO)
(72) Inventor: Halvorsen, Tor Svein, 4800 Arendal (NO); Alfsen, Frode, 4990 Sondeled (NO)
(74) Representative: Becker Kurig Straus

(57) **Abstract**

A discharge device for placing over a bottom (3) in a vertical cylindrical silo (1), for discharging material through at least one elongated discharge opening (4) in the bottom (3) of the silo, comprises at least two pushing plates (5, 6, 7) which are arranged one on top of the other and are forwardly and backwardly rotatably mounted about a vertical axis (11) in the silo (1), and at least one actuator (8, 9, 10) for generating forward and backward rotary motion.

## Description

The invention relates to a discharge device for placing over a bottom of a vertical cylindrical silo, for discharging material through at least one elongated discharge opening in the bottom of the silo.

Silos are used for storing various powdered and pellet-formed materials, such as corn, cement, chippings, fertilizer and animal fodder. Silos are also used for storing waste and other material of irregular shape. Silos are further used for storing viscous wet materials such as sludge, for example sewage sludge. Silos usually have an inlet at the top and outlet at the bottom.

On account of the tendency of many materials to clump together and form bridges, it is usually necessary to use a movable discharge device in the bottom of the silo.

Norwegian patent no. 140 262 describes a discharge device for placing in the bottom of a silo, for discharging material through a discharge opening in the bottom of the silo, comprising a sliding frame with carriers for the material and intermediate openings for throughput of the material. The discharge opening is in the form of a channel with a semicircular bottom and extends diametrically over the bottom of the silo. A screw conveyor for the further discharge of the material is provided in the channel.

In one embodiment the sliding frame is linearly movable back and forth by means of a drive body, the sliding frame being slightly smaller than the bottom of the silo. This sliding frame works well for materials with little tendency to form lumps, such as corn, while materials which have a strong tendency to form lumps, such as cement, and materials of irregular shape, such as waste, can easily become wedged between the sliding frame and the silo wall, with the result that the sliding frame's movement is impeded.

In another embodiment of the discharge device in NO 140 262 the sliding frame is substantially circular and rotatable back and forth. In this embodiment the sliding frame can cover the entire bottom of the silo, thereby eliminating the above-mentioned problem of objects becoming wedged. The control of the rotary motion is achieved with curved pushing rods which are mounted on the bottom of the sliding frame and are movable in a corresponding curved guiding channel in the bottom of the silo, placed slightly within half of the distance from the centre of the sliding frame to the circumference of the sliding frame. The forward and backward rotary motion is generated in this embodiment by a sliding piston motor, with its point of force application slightly outside the pushing rods. This discharge device too has been shown to be encumbered with problems. One problem is that after a time material is deposited in the guide channel, partly blocking it and causing the pushing rods to become jammed. For this reason, and also due to the location of the sliding piston motor's point of application of force on the sliding frame, the force required from the sliding piston motor is relatively great. This leads to the need for a sliding piston motor with large dimensions, which of course is undesirable from an economic point of view. The sliding piston motor, which in a practical embodiment will be in the form of a hydraulic cylinder, is located inside the silo, and another problem associated with the design according to NO 140 262 is that after a time materials in the silo penetrate into the hydraulic cylinder, causing jamming and/or wear of the cylinder's and the piston's sliding surfaces, which may lead to leakage of hydraulic fluid, with a resulting loss of functional efficiency.

Norwegian patent no. 305 831 describes a discharge device for placing in a silo bottom for discharging material, particularly waste, which comprises at least two fixed holding plates, which are mounted above each other and displaced relative to each other, for supporting the overlying material, and pushing plates mounted between the holding plates, which pushing plates are linearly movable back and forth for discharging the material. A forwardly and backwardly driven carriage, which is connected to the pushing plates or extensions of the pushing plates in attachment points, generates the pushing plates' linear movement.

The discharge device according to NO 305 831 forms a substantially rectangular stairway, and fits into the bottom of a silo with a rectangular cross section. Silos with a rectangular cross section are often used for waste, and the discharge device according to NO 305 831 is well suited to this purpose.

High silos for pellet-formed material, however, may be exposed to a substantial hydrostatic pressure from the pellet-formed material, and on some occasions may also be pressurized. Such silos are usually made in cylindrical form, since a cylindrical silo can withstand internal overpressure far better than a silo with a rectangular cross section. In cylindrical silos a circular discharge device has to be employed, and consequently the discharge device according to NO 305 831 is unsuitable for this kind of use. Another disadvantage of the discharge device according to NO 305 831 is that powdered or pellet-formed materials, particularly wet materials, leak through the discharge device and land underneath the stairway, where the material has to be removed manually.

The object of the invention is to produce a discharge device for placing over a bottom in a vertical cylindrical silo, which discharge device should provide an efficient discharge of powdered or pellet-formed materials. A special object is that the discharge device should be suitable for discharge of wet materials.

The object is achieved according to the invention with a discharge device of the type mentioned in the introduction which is characterized by the features which are indicated in the claims.

The invention therefore consists in a discharge device for placing over a bottom in a vertical cylindrical silo, for discharging material through at least one elongated discharge opening in the bottom of the silo, which discharge device comprises at least two pushing plates which are arranged one on top of the other and are forwardly and backwardly rotatably mounted about a vertical axis in the silo, and at least one actuator for generating forward and backward rotary motion.

The actuators are preferably composed of linear actuators which are installed under the bottom of the silo, generating forward and backward movement which is transferred to the pushing plates via arms which are connected to mutually coaxial hub parts which are provided in the silo's vertical axis and attached to the pushing plates.

Thus the least number of pushing plates employed in the invention is two. It will also be possible to employ three or more pushing plates placed one on top of the other. It is preferred that the pushing plates' area should decrease with their position successively from the bottom of the silo, with the result that the bottom plate has the largest area, and the top plate has the smallest area. A pyramid-like stairway structure is thereby formed where each step in the stairway, i.e. each pushing plate, is movable back and forth in a circumferential direction. A stationary horizontal scraper is preferably mounted above the top pushing plate. Adjacent pushing plates are preferably moved in antiphase. By means of the pushing plates' movement, material which is located in the silo is pushed from the top plate, down on to the underlying plate, and on down to the bottom of the silo, from where the material is pushed down into the discharge opening.

Further objects, advantages and preferred embodiments will be apparent in the detailed description.

The invention will now be explained in more detail in connection with the description of specific embodiments, and with reference to the drawings, in which:
fig. 1 illustrates a cross section through a silo with a discharge device according to the invention,
fig. 2 illustrates a cross section through the lower portion of the silo in fig. 1, viewed in the direction II-II in fig. 1,
fig. 3 illustrates the discharge device in a centre position for the forward and backward rotary motion, viewed from above in the direction III in fig. 1,
figs. 4a-c illustrate the discharge device in an extreme position, a centre position and a second extreme position respectively for the forward and backward rotary motion, viewed from above in the direction III in fig. 1,
figs. 5a-c illustrate a second discharge device in an extreme position, a centre position and a second extreme position respectively for the forward and backward rotary motion, viewed from above corresponding to the direction III in fig.1.

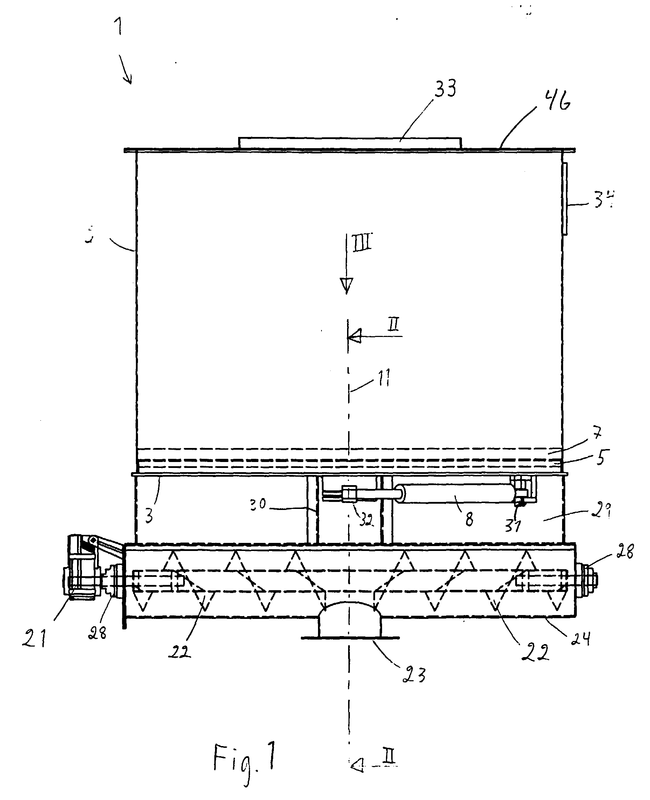

Fig. 1 illustrates a cross section through a vertical, cylindrical silo 1 with a wall 2 with a hatchway 34, a top 46 with a lid 33, and a bottom 3. The silo 1 is used for storing material (not illustrated), such as corn, cement, chippings, fertilizer, animal fodder, sludge or waste. The silo has an inlet at the top through the lid 33, and an outlet in the form of an elongated, diametrical discharge opening at the bottom 3, which is not illustrated in fig. 1, and which will be discussed in more detail later. The materials usually have a tendency to clump together, forming bridges. In order to counteract this clumping together and bridge formation, a discharge device is provided at the bottom of the silo, above the bottom 3 of the silo. The discharge device feeds the material to the discharge opening, where it drops down.

A screw conveyor 22 is located under the discharge opening, and conveys the material to an outlet 23 for the screw conveyor, from where the material drops on to, for example, a conveyor belt or the loading area of a vehicle. The screw conveyor is arranged in a housing 24, and is mounted in supports 28 in the housing's walls. A drive unit 21, which may be an electric gear motor, is installed outside the housing 24 for operation of the screw conveyor 22. The screw conveyor with associated components is of a known type, and will therefore not be described in more detail.

The discharge device according to the invention comprises at least two pushing plates which are arranged one on top of the other and are forwardly and backwardly rotatably mounted about a vertical axis 11 in the silo 1, and at least one actuator for generating forward and backward rotary motion. In fig. 1 a lower pushing plate 5 and an upper pushing plate 7 are illustrated. There is also illustrated a linear actuator 8, which is located in an actuator space 29 below the bottom 3 of the silo, for generating the forward and backward rotary motion for the lower pushing plate 5. A similar non-illustrated linear actuator generates forward and backward rotary motion for the upper pushing plate 7. The linear actuators are composed of hydraulic cylinders which at the cylinder end are attached to the underside of the bottom 3 of the silo in rotatable attachments 31, and at the piston end are attached to arms in rotatable attachments 32, which will be described in more detail later.

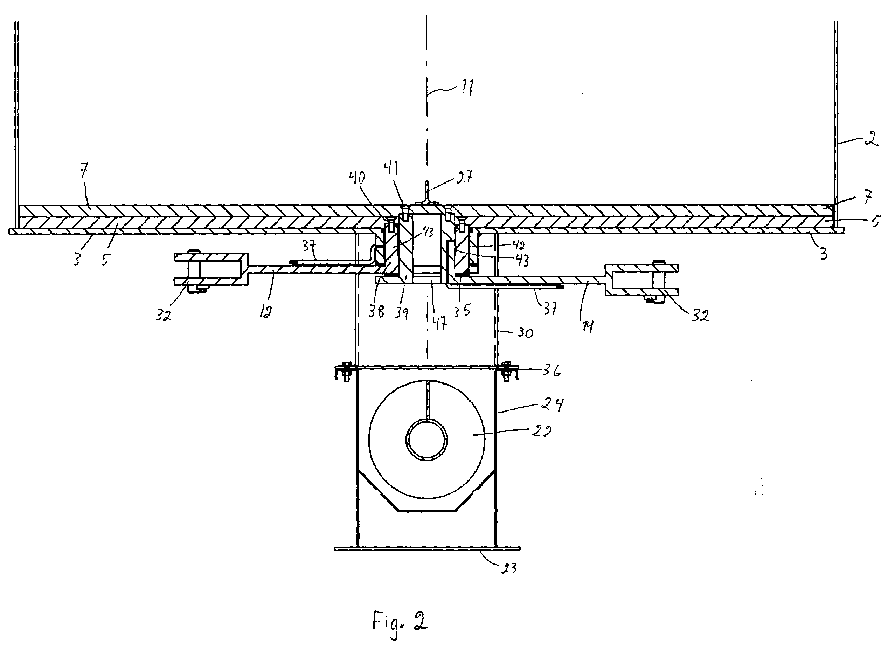

Fig. 2 illustrates a cross section through the lower portion of the silo in fig. 1, viewed in the direction II-II in fig. 1. A hub structure installed in the bottom 3 of the silo forms a mounting for the lower and upper pushing plates 5, 7, and provides transfer of the forward and backward movement from the linear actuators to the pushing plates. The hub structure comprises three substantially cylindrical parts which are coaxial relative to the axis 11, viz. an external hub part 42 which is part of the bottom 3 of the silo and forms a foundation for the support, a central hub part 38 and an internal hub part 39. A lubricant can be applied to sliding surfaces 43 between the hub parts 42, 38, 39 through supply pipe 37, thus ensuring sliding radial mounting of the hub parts.

At its lower edge the central hub part 38 forms part of an arm 12 which is provided at a distance from the vertical axis 11 with a rotatable attachment 32 for the piston end of a hydraulic cylinder. The attachment 32 is composed of a fork with a bolt and a safety cotter pin. The hydraulic cylinder is not illustrated, but it should be understood that both the hydraulic cylinder and the attachment 32 are of a conventional type. At its upper edge the central hub part 38 is securely connected to the lower pushing plate 5 by connecting screws 40. A movement of the associated hydraulic cylinder either outwards or inwards in a direction across the plane of the cross section through the discharge device which is illustrated in fig. 2 will rotate the arm 12 about the vertical axis 11. This rotary motion will be transferred via the hub part 38 to the lower pushing plate 5. A repeated outward and inward movement of the hydraulic cylinder will convey a forward and backward rotary motion to the lower pushing plate 5.

At its lower edge the internal hub part 39 similarly forms part of an arm 14, which like the arm 12 is provided at a distance from the vertical axis 11 with a rotatable attachment 32 for the piston end of a hydraulic cylinder. At its upper edge the internal hub part 39 is securely connected to the upper pushing plate 7 by connecting screws 41. In the same way as that explained above, movement of the associated hydraulic cylinder (not illustrated) will convey a forward and backward rotary motion to the upper pushing plate 7.

Pressurized hydraulic fluid is supplied to the hydraulic cylinders from a hydraulic pump. Supply and discharge of hydraulic fluid are controlled by valves, which in turn are controlled by a control system, which may be a programmable logic control, which can be programmed to control the hydraulic cylinders' movement according to requirements. This control function is implemented by devices according to the prior art.

The arms 12, 14 and the pushing plates 5, 7 provide securing of the hub parts 38, 39 in the axial direction. A sliding surface 35 provides axial mounting. In addition to the sliding surfaces 35, 43, the hub structure has a lower cover 47. The hub structure may also have seals, distance rings and other components of secondary importance. The hub structure is surrounded by a hub housing 30, the underside of which, via a flange connection 36, supports the screw conveyor's housing 24 with the screw conveyor 22 and the outlet 23.

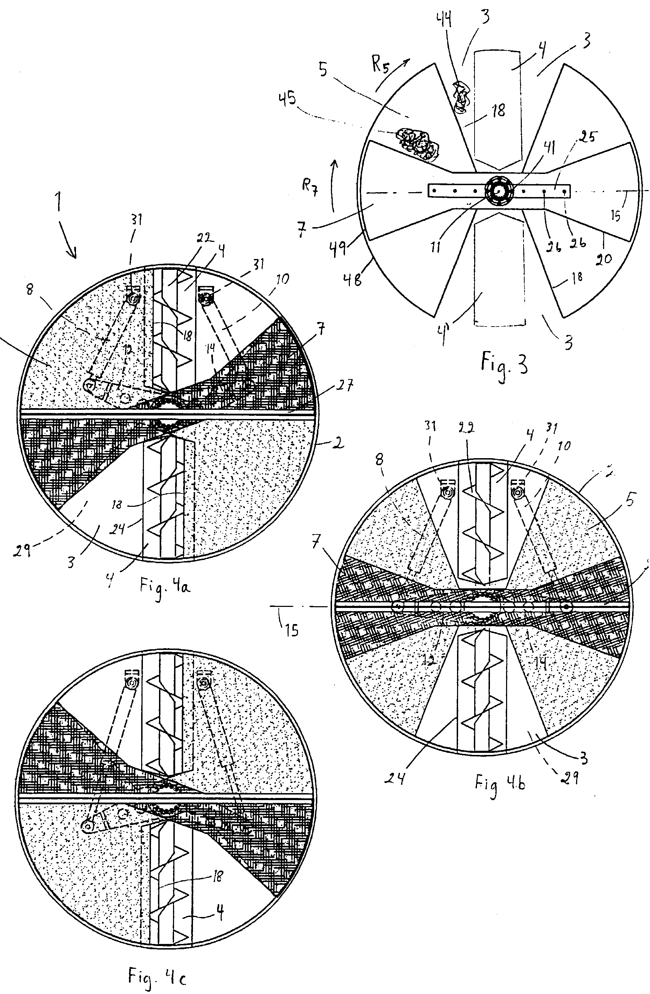

Fig. 3 illustrates the discharge device in a centre position for the forward and backward rotary motion, viewed from above in the direction III in fig. 1. The silo's wall is not illustrated here. The figure shows the discharge opening, which is provided in the bottom 3 of the silo. It can be seen that the discharge opening is actually composed of two discharge openings 4, 4', which in the silo's central area border on the hub structure, with the result that the two discharge openings 4, 4' together form an approximately diametrical discharge opening. Material which drops into the discharge openings drops further down into the housing for the screw conveyor and is passed to the outlet 23. The discharge openings 4, 4' are bounded towards the hub structure by the hub housing 30, while in the underside they are integral with the housing 24 for the screw conveyor, see figs. 1 and 2. For the sake of simplicity in the description of the invention, the discharge openings 4, 4' in the following description will be referred to only as the discharge opening 4.

During operation of the discharge device the pushing plates as already mentioned rotate back and forth. When the upper pushing plate 7 rotates in the direction R₇, it pushes material 45 which is located on the lower pushing plate 5 over the lateral edge 18 of the lower pushing plate 5, causing the material 45 to drop down on to the silo bottom 3. The upper pushing plate 7 then rotates backwards, opposite the direction R₇, and new amounts of overlying material drop down on to the lower pushing plate 5. When the lower pushing plate 5 rotates in the direction R₅, it pushes material 44 which is located on the silo bottom 3 down into the discharge opening 4, where the material drops further down into the housing for the screw conveyor. The lower pushing plate 5 then rotates backwards, opposite the direction R₅.

The discharge device according to the invention will work with different patterns of movement for the lower and upper pushing plates. For an efficient discharge, which is normally desirable, however, it is preferred that the two pushing plates should be rotated forwards and backwards continuously and in antiphase, since rotary motion in antiphase causes overlying material to be passed down from the top of an underlying pushing plate to areas in front of the underlying pushing plate's lateral edge when the underlying pushing plate rotates in the direction away from the discharge opening.

The discharge device according to the invention will work with pushing plates of different shapes and sizes. It is preferred, however, that the area of the pushing plates should decrease with their position successively from the bottom 3 of the silo, with the result that the lower pushing plate 5 is larger than the upper pushing plate 7, as illustrated in fig. 3. By this means a stairway-like discharge device is formed, where the material is passed uniformly down from the upper pushing plate 7 to the bottom 3 in the direction of the discharge opening.

It can be seen from fig. 3 that the pushing plates 5, 7 are symmetrical, with axes of symmetry 15 extending through the silo's vertical axis 11. It can further be seen that the pushing plates' axes of symmetry 15 are perpendicular to the elongated discharge opening 4 when the pushing plates 5, 7 are located in a centre position for the forward and backward rotary motion. This symmetry causes the material in the silo to be fed equally towards the discharge opening on both sides of the pushing plates by means of their forward and backward rotary motion, thus obtaining a uniform discharge.

It can further be seen that the pushing plates 5, 7 have lateral edges 18, 20 which extend substantially radially out from the silo's vertical axis 11. The result of this is that the material in the silo is passed substantially straight towards the discharge opening 4, thus contributing towards an efficient discharge of the material. The illustrated pushing plates furthermore have circular circumferential edges 48, 49 in order to sealingly fit against the silo's side walls. This is advantageous, since otherwise the material in the silo could remain lying at the pushing plates' circumferential edges, without being passed to the discharge opening by the pushing plates' forward and backward rotary motion.

The pushing plates may be made of steel, which is a natural choice in a silo. The pushing plates in fig. 3, however, are made of a light synthetic material, for example glass fibre-reinforced polyester. It can be seen that the upper pushing plate 7 is connected to an attachment rail 25 by screws 26. The attachment rail 25 in turn is connected to the internal hub part 39. The lower pushing plate 5 may be attached to the central hub part 38 in a similar manner, by an attachment rail which is recessed in the lower pushing plate. This embodiment of the attachment of the pushing plates to the hub parts 38, 39 differs from that illustrated in fig. 2, which shows steel pushing plates which are directly attached to the hub parts.

Figs. 4a, b and c illustrate the discharge device in an extreme position, a centre position and a second extreme position respectively for the forward and backward rotary motion, viewed from above in the direction III in fig. 1. Fig. 4b corresponds to fig. 3, but also shows the silo wall 2, the screw conveyor 22 with its housing 24, the linear actuator 8 for the lower pushing plate 5, a linear actuator 10 for the upper pushing plate 7, and respective arms 12 and 14. It can be seen that the screw conveyor's housing extends diametrically through the actuator space 29. The cylinder attachments 31 on the underside of the silo's bottom are arranged on the sides of the screw conveyor's housing 24, and the linear actuators 8, 10 point away from the screw conveyor's housing, with the result that there is room for both the screw conveyor's housing 24 and the components which are connected with the forward and backward motion in the same plane under the bottom 3 of the silo.

In the extreme positions illustrated in figs. 4a and c the pushing plates 5, 7 are displaced a maximum amount relative to each other, with the pushing plates rotating in antiphase. It can be seen that in the extreme positions the lateral edges 18 of the lower pushing plate 5 have been moved slightly past the edge of the discharge opening 4. It is further seen that in this embodiment of the invention the pushing plates rotate less than a quarter revolution between the extreme positions.

Figs. 4a-c also illustrate a stationary horizontal scraper 27 which is mounted above the upper pushing plate 7, and which is also illustrated in fig. 2. The horizontal scraper 27 is advantageous in that, during the forward and backward movement of the upper pushing plate 7, it retains and scrapes down material located on the upper pushing plate, thereby contributing towards the discharge of material. The horizontal scraper 27 is securely connected to the silo's wall 2.

In an embodiment, which is not illustrated in the figures, the horizontal scraper 27 forms a support for an upper mounting of the pushing plates in the silo's vertical axis 11. This relieves the pressure on the hub structure and reduces laterally directed forces on the hub parts.

Figs. 5a-c illustrate a second discharge device according to the invention in an extreme position, a centre position and a second extreme position respectively for the forward and backward rotary motion, viewed from above corresponding to the direction III in fig. 1.

The discharge device has three pushing plates; a lower pushing plate 5, a central pushing plate 6 and an upper pushing plate 7, which are urged via three arms 12, 13, 14 to forward and backward movement by three linear actuators 8, 9, 10. The central pushing plate's lateral edge is indicated by reference numeral 19. Other components correspond to that which is illustrated and described with reference to figs. 3 and 4a-c, and are indicated by the same reference numerals.

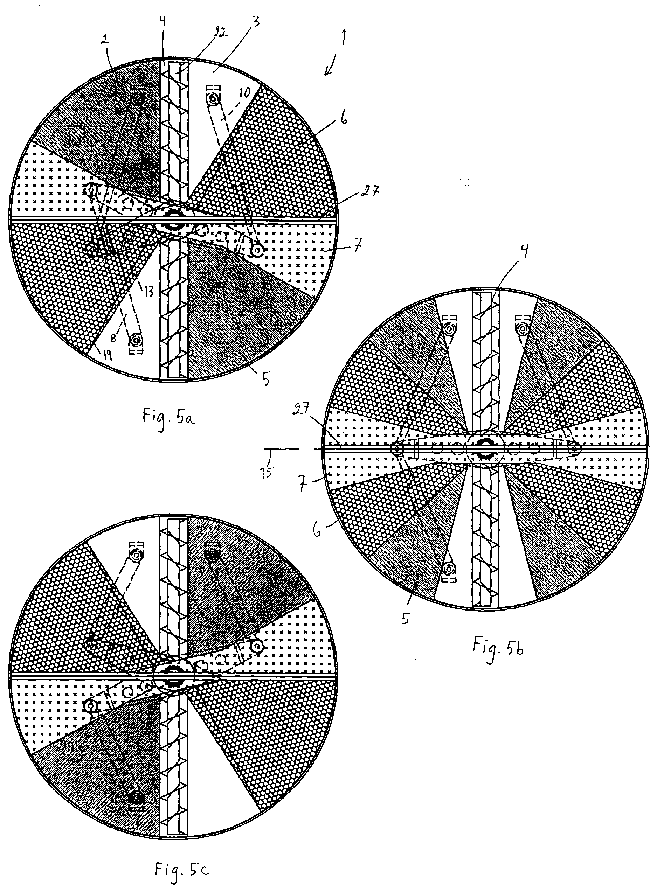

In this embodiment too the pushing plates have a symmetrical shape, which is illustrated in fig. 5b, where all the pushing plates are located in a centre position, symmetrically about the axis of symmetry 15 and the discharge opening 4. Adjacent pushing plates are moved in antiphase, which means that the lower pushing plate 5 and the central pushing plate 6 are moved in antiphase, and the central pushing plate 6 and the upper pushing plate 7 are moved in antiphase. The lower and upper pushing plates are therefore moved in phase, and could basically have been driven by the same linear actuator. It can be seen that in this case too the area of the pushing plates decreases with their position successively from the bottom 3 of the silo. Thus the lower pushing plate is largest, the central pushing plate is slightly smaller, and the upper pushing plate is the smallest.

With the invention a discharge device is provided for placing over the bottom of a vertical cylindrical silo, which discharge device provides an efficient discharge of pellet-formed or powdered materials. No spaces are formed where material is collected without being fed out into the discharge opening, and there is therefore no need for manual removal of material. Wet materials, such as sludge, if resident in the silo for too long a period, may sediment or undergo processes which emit gases, and consequently the discharge device according to the invention is well-suited for wet materials.

The invention has been described in the above with reference to specific embodiments. It is clear, however, that variants are possible within the scope of the invention, associated, for example, with the design of the linear actuators, which, in addition to the illustrated hydraulic cylinders, may also be in the form of pneumatic cylinders or electric actuators where rotary motion is transferred from electric motors to linear motion via a screw transmission. Another example of a variant is that instead of the illustrated linear actuators which are located under the bottom 3 of the silo, a hydraulic torque motor may be employed which may be enclosed and placed on top of the bottom 3, and which drives all the pushing plates via a gear. This is an embodiment which in many cases will be suitable for retrofitting in existing silos.

## Claims

1. A discharge device for placing over a bottom (3) of a vertical cylindrical silo (1), for discharging material through at least one elongated discharge opening (4) in the bottom (3) of the silo,
characterized in that it comprises at least two pushing plates (5, 6, 7) which are arranged one on top of the other and forwardly and backwardly rotatably mounted about a vertical axis (11) in the silo (1), and at least one actuator (8, 9, 10) for generating forward and backward rotary motion.

2. A discharge device according to claim 1,
characterized in that the actuators are composed of linear actuators (8, 10) which are installed under the bottom (3) of the silo, and that the forward and backward movement is transferred from the linear actuators (8, 10) to the pushing plates (5, 7) via arms (12, 14) which are connected to mutually coaxial hub parts (38, 39) which are arranged in the silo's vertical axis (11), constituting an attachment for the pushing plates (5, 7).

3. A discharge device according to claim 1 or 2,
characterized in that the pushing plates (5, 6, 7) have axes of symmetry (15) extending through the silo's vertical axis (11).

4. A discharge device according to one of the preceding claims,
characterized in that the pushing plates' axes of symmetry (15) are perpendicular to the elongated discharge opening (4) when the pushing plates (5, 6, 7) are located in a centre position for the forward and backward rotary motion.

5. A discharge device according to one of the preceding claims,
characterized in that adjacent pushing plates (5,6; 6,7) rotate in antiphase.

6. A discharge device according to one of the preceding claims,
characterized in that the pushing plates' (5, 6, 7) area decreases with their position successively from the bottom (3) of the silo.

7. A discharge device according to one of the preceding claims,
characterized in that the pushing plates (5, 6, 7) have lateral edges (18, 19, 20) extending substantially radially from the silo's vertical axis (11).

8. A discharge device according to one of the preceding claims, characterized in that the pushing plates (5, 6, 7) are composed of a light
synthetic material which is attached via an attachment rail (25) to hub parts (38, 39) in the silo's vertical axis (11).

9. A discharge device according to one of the preceding claims,
characterized in that a stationary horizontal scraper (27) is mounted above the top pushing plate (7).

10. A discharge device according to one of the preceding claims,
characterized in that the horizontal scraper (27) is securely connected to walls (2) of the silo, forming a support for an upper mounting for the pushing plates (5, 6, 7) in the silo's vertical axis (11).
